# EUROPEAN PATENT APPLICATION

(11) **EP 2 009 726 A1**
(43) Date of publication of application: **31.12.2008**
(21) Application number: 07739719.8
(22) Date of filing: 27.03.2007
(51) Int. Cl.: H01M 8/06, C01B 3/38, H01M 8/04, H01M 8/12

(54) **SOLID OXIDE FUEL CELL AND REFORMER**

(30) Priority: 31.03.2006 JP 2006098636
(71) Applicant: Nippon Oil Corporation, Tokyo 105-8412 (JP)
(72) Inventor: MIZUNO, Yasushi, Yokohama-shi, Kanagawa 2310815 (JP); HATADA, Susumu, Yokohama-shi, Kanagawa 2310815 (JP)
(74) Representative: Cabinet Plasseraud
(86) International application number: PCT/JP2007/056281
(87) International publication number: WO 2007/114110

(57) **Abstract**

There are provided an indirect internal reforming-type SOFC in which a reformer is heated by radiation heat from a SOFC, wherein the heat receiving area of a reformer can be easily made large and stable operation is possible without decreasing the efficiency, and a reformer suitable to the SOFC. The indirect internal reforming-type solid oxide fuel cell comprising a reformer capable of reforming kerosene and a solid oxide fuel cell which uses as a fuel a reformed gas obtained by the reformer is **characterized in that** the indirect internal reforming-type solid oxide fuel cell comprises a plurality of solid oxide fuel cell stacks; the reformer comprises a plurality of reaction tubes packed with a reforming catalyst capable of steam-reforming kerosene; and the reaction tubes are arranged in two rows with the tubes spaced from each other and form a staggered arrangement in a location interposed between the stacks. The reformer capable of reforming kerosene is **characterized in that** the reformer has a plurality of reaction tubes packed with a reforming catalyst; and the reaction tubes are arranged in two rows with the tubes spaced from each other and form a staggered arrangement.

## Description

### Technical Field

The present invention relates to a solid oxide fuel cell, particularly to an indirect internal reforming-type solid oxide fuel cell having a reformer in the vicinity of the fuel cell. The present invention relates also to a reformer to reform kerosene used for an indirect internal reforming-type solid oxide fuel cell.

### Background Art

In a solid oxide fuel cell (hereinafter, as the case may be, referred to as SOFC), a reformed gas containing hydrogen made by reforming a reforming raw material such as kerosene is supplied as a fuel to an SOFC.

Since the operation temperature of the SOFC is high and near to the reforming temperature of a reforming raw material, a so-called indirect internal reforming-type SOFC having a structure in which a reformer is disposed in the vicinity of an SOFC and these are contained in a can is employed in some cases (see Patent Document 1). In the indirect internal reforming-type SOFC, radiation heat from an SOFC can be utilized for reforming.
Patent Document 1: Japanese Patent Laid-Open No. 2002-358997

### Disclosure of the Invention

### Problems to be Solved by the Invention

However, when a higher-order hydrocarbon such as kerosene is used as a reforming raw material, if hydrocarbon components whose reforming has not progressed are supplied to a solid oxide fuel cell, whose operation temperature is high, carbon deposition damages the operational stability in some cases. Therefore, a higher-order hydrocarbon such as kerosene is desirably converted completely to a C1 compound (a compound of which carbon number is 1).

For a reformer to well receive radiation heat from an SOFC, the heat receiving area of the reformer facing the SOFC is desirably made large. If the heat receiving area is small, in some cases, the reformer cannot be well heated by radiation heat from the SOFC and kerosene cannot be completely converted, thereby not enabling the stable operation. In these cases, for not decreasing the conversion ratio of kerosene in a reformer, the fuel utilization ratio is conceivably reduced to increase the amount of waste heat of the SOFC. However, in this method, since the heat by burning a fuel once reformed is utilized for the heat supply to a reformer, the efficiency decreases.

It is an object of the present invention to provide an indirect internal reforming-type SOFC in which a reformer is heated by radiation heat from an SOFC, wherein the heat receiving area of the reformer can be easily made large and stable operation is possible without decreasing the efficiency.

It is another object of the present invention to provide a reformer suitably usable for such an indirect internal reforming-type SOFC.

### Means for Solving the Problems

The present invention provides an indirect internal reforming-type solid oxide fuel cell having a reformer capable of reforming kerosene and a solid oxide fuel cell which uses as a fuel a reformed gas obtained by the reformer, characterized in that:
the indirect internal reforming-type solid oxide fuel cell has a plurality of solid oxide fuel cell stacks;
the reformer has a plurality of reaction tubes packed with a reforming catalyst capable of steam-reforming kerosene; and
the reaction tubes are arranged in two rows with the tubes spaced from each other and form a staggered arrangement in a location interposed between the stacks.

The two tube rows of the reaction tubes may be arranged with an overlap in the direction perpendicular to the tube row direction.

The two tube rows of the reaction tubes may be arranged with an overlap in the tube row direction.

The reforming catalyst preferably includes a reforming catalyst having a kerosene oxidative activity.

The present invention provides a reformer capable of reforming kerosene, characterized in that:
the reformer has a plurality of reaction tubes packed with a reforming catalyst; and
the reaction tubes are arranged in two rows with the tubes spaced from each other and form a staggered arrangement.

The reforming catalyst preferably includes a reforming catalyst having a kerosene oxidative activity.

### Advantages of the Invention

The present invention provides an indirect internal reforming-type SOFC in which a reformer is heated by radiation heat from an SOFC, wherein the heat receiving area of the reformer can be easily made large and stable operation is possible without decreasing the efficiency.

The present invention provides a reformer suitably usable for such an indirect internal reforming-type SOFC.

### Brief Description of the Drawings

Figure 1 is a schematic view illustrating one mode of the indirect internal reforming-type solid oxide fuel cell of the present invention; and (a) is a top view and (b) is a side view;
Figure 2 is a schematic view illustrating the arrangement of reaction tubes; and
Figure 3 is a schematic view illustrating an operation method of the indirect internal reforming-type solid oxide fuel cell of the present invention.

### Description of Symbols

1 HEADER
2 REACTION TUBE
3 SOLID OXIDE FUEL CELL STACK
10 TUBE ROW OF REACTION TUBES
11 PLANE CONTAINING CENTER AXES OF REACTION TUBES

### Best Mode for Carrying Out the Invention

Hereinafter, the present invention will be described in detail by way of the drawings, but the present invention is not limited thereto.

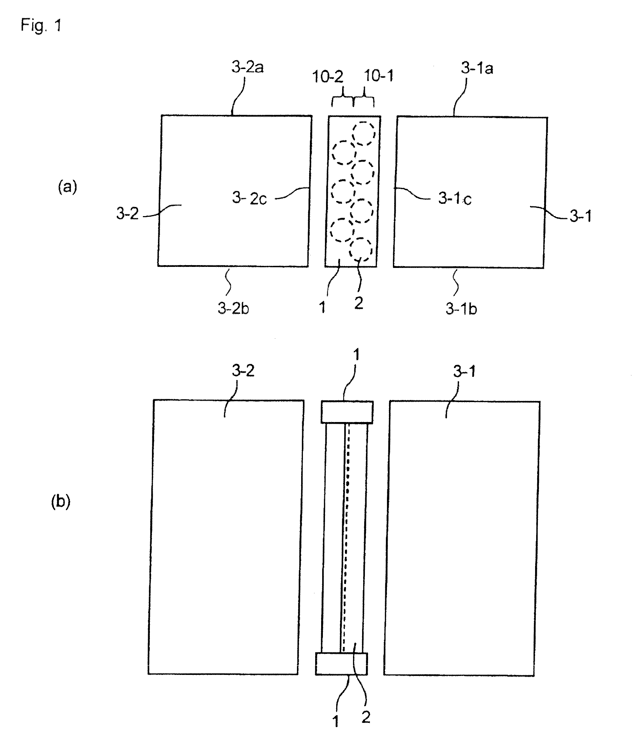

Figure 1 is a schematic view illustrating one mode of the indirect internal reforming-type solid oxide fuel cell of the present invention. Figure 1(a) is a top view and Figure 1(b) is a side view. As shown in Figure 1, a plurality of reaction tubes 2 are arranged in a location interposed between two SOFC stacks (a first stack 3-1 and a second stack 3-2).

The stacks 3-1 and 3-2 are each a stack in which a plurality of cells of a planar SOFC are laminated.

Each reaction tube is filled with a reforming catalyst capable of reforming kerosene. Each reaction tube is connected to headers 1 at the upper end and the lower end of the tube. The reaction tubes and the headers constitute a reformer. The headers can suitably employ a well-known header structure in which a gas can be distributed to a plurality of tubes and the gas can be collected from the plurality of tubes.

As the plurality of reaction tubes, circular tubes having the same diameter and length are used. This is preferable in view of the uniformity of the reaction of every reaction tube.

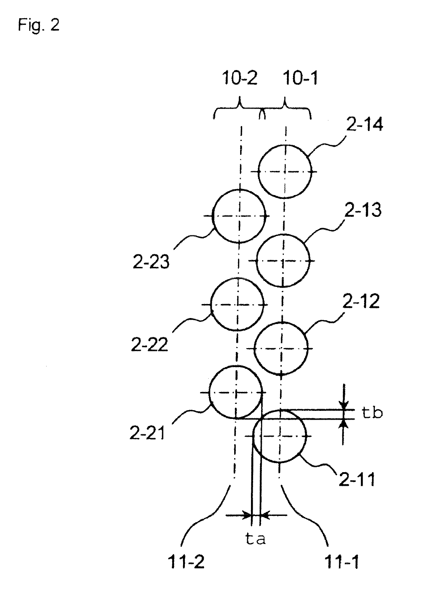

The reaction tubes are arranged in two rows with the tubes spaced from each other and form a staggered arrangement. The way of the reaction tube arrangement will be described using Figure 2.

As shown in Figure 2, reaction tubes 2-11 to 2-14 are lined up in even intervals in a row to make a first tube row 10-1. Reaction tubes 2-21 to 2-23 are also lined up in even intervals in a row to make a second tube row 10-2 parallel with the first row. The intervals between the reaction tubes of the first tube row are the same as those between the reaction tubes of the second tube row. This is preferable in view of uniform heat receiving of every reaction tube.

The two tube rows are arranged in a staggered manner. That is, in the longitudinal direction of the tube rows (in Figure 2, in the top and down directions on paper), one reaction tube of one tube row is arranged at the middle point of two reaction tubes of the other tube row adjacent to the one tube row. For example, the central axis of the reaction tube 2-21 is at equal distances from the central axis of the reaction tube 2-11 and the central axis of the reaction tube 2-12.

The central axes of the reaction tubes 2-11 to 2-14 are on one plane (a first plane 11-1) and the central axes of the reaction tubes 2-21 to 2-23 are on one plane (a second plane 11-2) different from the first plane. The distance between the first plane and the second plane is smaller than the outer diameter of the reaction tubes. Therefore, when viewed from the longitudinal direction of the tube rows, the first row and the second row are overlapped with an overlapping margin ta. That is, the two rows are arranged with an overlap in the direction perpendicular to the tube row direction. Further, the intervals of the reaction tubes in each of the first row and the second row (for example, a distance between the reaction tubes 2-11 and 2-12) are smaller than the outer diameter of the reaction tubes. Therefore, when viewed from the lateral direction of the tube rows, a reaction tube of the first row and a reaction tube of the second row (for example, the reaction tubes 2-11 and 2-21) are overlapped with an overlapping margin tb. That is, the two tube rows are arranged with an overlap in the tube row direction. With respect to the overlapping margins ta and tb, arrangement of the tube rows with overlaps is preferable in view of the space utilization efficiency.

In two SOFC stacks, unit cells of the same shape and size are stacked in the same number of unit cells. Therefore, the two stacks have the nearly same shape and size. The two stacks are lined up so that their side surfaces (side surfaces 3-1 a and 3-2a, and side surfaces 3-1 b and 3-2b) are aligned in a plane.

The reaction tubes are arranged inside the flush planes. That is, the lengths of the tube rows of the reaction tubes are smaller than the widths of the stack side surfaces 3-1c and 3-2c, which the reaction tube rows face. Further, the lengths of the tube rows are made near to the widths of the stack side surfaces 3-1c and 3-2c. This is preferable in view of effective heating of the reaction tubes by radiation heat from SOFC.

The distances between each reaction tube and the stack (for the first tube row 10-1, the distance between the tubes thereof and the side surface 3-1 c of the first stack; for the second tube row 10-2, the distance between the tubes thereof and the side surface 3-2c of the second stack) are the same. This is preferable in view of uniform heat receiving of every reaction tube.

Use of the plurality of reaction tubes allows taking a larger heat receiving area which receives radiation heat and can thereby utilize the radiation heat of an SOFC more effectively compared with use of a single reaction vessel.

By arranging the reaction tubes in two rows with the tubes spaced from each other and in a staggered manner in the location interposed between the stacks, the reaction tubes of each of the first tube row and the second tube row are heated by radiation heat from the stacks on both sides. Additionally, since the reaction tubes can be arranged in a shape resembling the so-called closest packing, excellent space utilization efficiency can easily be achieved.
Compared with the case where reaction tubes are arranged in a single row, a larger number of reaction tubes can be arranged without making the tube row length long. This is effective on enlarging the heat receiving area. In the case where reaction tubes are arrayed in three or more rows, inner tube row(s) can hardly receive the radiation heat from stacks compared with the end tube rows. Hence, effective usage of the surface area of reaction tubes as a heat receiving area becomes difficult, and the heat amount which every reaction tube receives becomes nonuniform. By making tube rows in two rows, it is easy to avoid such a situation, to use the surface of the reaction tubes as an effective heat receiving area, and to easily achieve an excellent uniformity of the heat amount which every reaction tube receives.

The reaction tubes are arranged in a location where the radiation heat can be transferred from the stacks to the reaction tubes. This radiation heat is preferably directly transferred. Therefore, preferably, substantially no blocking object is arranged between the reaction tubes and the stacks. Further, the distance between the reaction tubes and the stacks is preferably as short as possible.

The reaction tube may be of single tube type or double tube type. The reaction tube of double tube type has a double tube structure composed of an outer tube and an inner tube, and a reforming catalyst capable of steam-reforming kerosene is packed in the space between the outer tube and the inner tube.

Although Figure 1 shows an example in which reaction tube rows are arranged between two stacks, three or more stacks may be arranged. For example, three stacks are lined up in one row; and between the first stack and the second stack and between the second stack and the third stack, corresponding two reaction tube rows may be arranged in a staggered manner. Further, the constitution shown in Figure 1 may be lined up adjacently in a plural number. Use of a plurality of stacks has an advantage for raising the generated power amount, and enables heating reaction tubes from both sides, and is effective for heating the reaction tubes by radiation heat.

As SOFC stacks, well-known SOFC stacks or SOFC bundles of planar type or tubular type may suitably be selected and employed. In the case of tubular SOFC bundles, if a reformer is put in the location interposed between SOFC bundles, the similar effect can be expected. In the present invention, "SOFC stack" is a notion including a bundle into which a plurality of tubular SOFCs is assembled in one bundle.

An SOFC and a reformer may be contained in a vessel such as a can to make a module.

In a reformer, especially in reaction tubes, a reformed gas, which is a hydrogen-containing gas, is manufactured from kerosene, which is a reforming raw material, by the steam reforming reaction. At this time, a partial oxidation reforming reaction may be involved, but the steam reforming is preferably made dominant in view of efficiently manufacturing hydrogen. At this time, reaction which is endothermic overall progresses in the reformer.

The partial oxidation reforming reaction is an exothermic reaction and the steam reforming reaction is an endothermic reaction. When a reforming raw material is CₙH₂ₙ₊₂ (n is a natural number), the partial oxidation reforming reaction is represented by CₙH₂ₙ₊₂ + (n/2) O₂ → n CO + (n+1) H₂. The steam reforming reaction is represented by CₙH₂ₙ₊₂ + nH₂O → n CO + (2n+1) H₂.

Usable reforming catalysts capable of steam-reforming kerosene include a steam reforming catalyst and an autothermal reforming catalyst (a catalyst having a steam reforming capability and a partial oxidation reforming capability). In addition to these, a partial oxidation reforming catalyst may be used.

A reforming catalyst preferably includes a reforming catalyst having a kerosene oxidative activity. The kerosene oxidative activity means a capability of generating heat by the oxidation reaction of kerosene with oxygen on a catalyst. With reaction tubes packed with a catalyst having the kerosene oxidative activity, heat is directly generated on the catalyst and a time till the temperature of the reforming catalyst reaches a temperature suitable for reforming can be shortened upon starting-up. The reforming catalyst having an oxidative activity for kerosene includes a rhodium-based catalyst. For example, a reforming catalyst can be imparted the kerosene oxidative activity by mixing a steam reforming catalyst with a rhodium-based catalyst.

Any well-known catalysts of steam reforming catalysts, autothermal reforming catalysts and partial oxidation reforming catalysts capable of reforming kerosene can suitably be selected and used. Examples of the partial oxidation reforming catalyst include a platinum-based catalyst; examples of the steam reforming catalyst include a ruthenium-based catalyst and a nickel-based catalyst; and examples of the autothermal reforming catalyst include a rhodium-based catalyst. With respect to the autothermal reforming catalyst, nickel, noble metals such as platinum, rhodium and ruthenium, and the like are known to have these activities as described in Japanese Patent Laid-Open Nos. 2000-84410 and 2001-80907, "2000 Annual Progress Reports (Office of Transportation Technologies)", and U.S. Patent No 5,929,286. Conventionally well-known catalyst shapes of a pellet form, a honeycomb form and other forms can suitably be employed.

Hereinafter, the respective operation conditions during power generation of the steam reforming and the autothermal reforming will be described.

The reaction temperature of the steam reforming is, for example, in the range of from 450°C to 900°C, preferably from 500°C to 850°C, more preferably from 550°C to 800°C. The amount of steam introduced in the reaction system is defined as a ratio (steam/carbon ratio) of the molar number of water molecules to the molar number of carbon atoms contained in a reforming raw material, and this value is set at preferably from 0.5 to 10, more preferably from 1 to 7, still more preferably from 2 to 5. If the reforming raw material is a liquid, the space velocity (LHSV) at this time is represented by A/B where the flow rate of the reforming raw material in the liquid state is A (L/h) and the catalyst layer volume is B (L), and this value is set in the range of preferably from 0.05 to 20 h⁻¹, more preferably from 0.1 to 10 h⁻¹, still more preferably from 0.2 to 5 h⁻¹.

In the autothermal reforming, an oxygen-containing gas is added to a raw material in addition to steam. The oxygen-containing gas may be pure oxygen, but is preferably air in view of easy availability. The oxygen-containing gas may be added so as to provide a generated heat amount enough to balance the endothermic reaction involved in the steam reforming reaction, and hold or raise the temperatures of a reforming catalyst layer and an SOFC. The amount of an oxygen-containing gas added is set, in terms of a ratio (oxygen/carbon ratio) of the molar number of oxygen molecules to the molar number of carbon atoms contained in a reforming raw material, at preferably from 0.05 to 1, more preferably from 0.1 to 0.75, still more preferably from 0.2 to 0.6. The reaction temperature of the autothermal reforming reaction is set in the range of, for example, from 450°C to 900°C, preferably from 500°C to 850°C, more preferably from 550°C to 800°C. If the raw material is a liquid, the space velocity (LHSV) at this time is selected in the range of preferably from 0.1 to 30, more preferably from 0.5 to 20, still more preferably from 1 to 10. The amount of steam introduced in the reaction system is set, in terms of steam/carbon ratio, at preferably from 0.3 to 10, more preferably from 0.5 to 5, still more preferably from 1 to 3.

The temperature of a reforming catalyst layer outlet is set at preferably not less than 580°C, more preferably not less than 620°C, still more preferably not less than 650°C to complete the steam reforming reaction of kerosene. Further, to suppress the thermal degradation of the reforming catalyst, the temperature is preferably not more than 850°C, more preferably not more than 800°C, still more preferably not more than 750°C.

From the view point that a sufficient heat is given to the reforming reaction described above by an SOFC, the operation temperature of a cell is preferably not less than 650°C, more preferably not less than 700°C, still more preferably not less than 750°C.

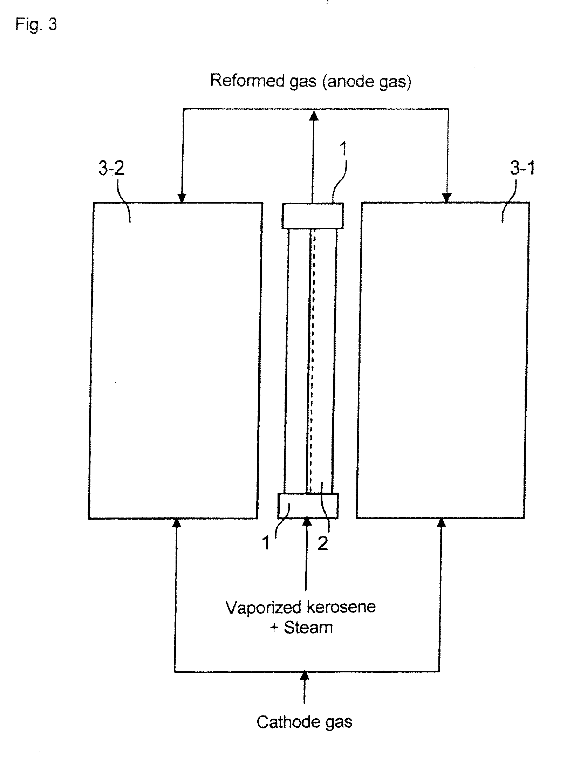

A method for operating the indirect internal reforming-type SOFC of the present invention will be described. As shown in Figure 3, a cathode gas is supplied to cathode sides of SOFC stacks 3-1 and 3-2. As the cathode gas, an oxygen-containing gas such as air is used. Kerosene vaporized in advance and steam are supplied to a reformer. Specifically, the vaporized kerosene and steam are supplied to a header 1 (inlet side), and are branched from the header to each reaction tube. Kerosene can be vaporized utilizing a well-known means which can vaporize kerosene.

The kerosene is reformed in the each reaction tube to become a reformed gas and the reformed gas is collected in the header 1 (outlet side) and discharged. This reformed gas is branched and supplied to anode sides of the stacks 3-1 and 3-2. Hydrogen in the reformed gas electrochemically becomes H₂O, when a power is generated. The heat of the gas discharged from the cathode and the gas discharged from the anode are suitably utilized, and then the gases are discharged out of the system (not shown in the figure).

If a reforming catalyst having a kerosene oxidative activity is used as a reforming catalyst, when the radiation heat of an SOFC cannot be utilized, i.e. upon starting-up or the like, or when a further heating in addition to heating by the radiation heat is intended, the oxidation reaction of kerosene is caused by supplying suitably air or the like to reforming tubes, and the reaction heat thereof can be utilized.

### Industrial Applicability

The indirect internal reforming-type SOFC of the present invention can be utilized for a stationary or mobile power generation system and a cogeneration system. The reformer of the present invention can suitably be utilized for the indirect internal reforming-type SOFC.

## Claims

1. An indirect internal reforming-type solid oxide fuel cell comprising a reformer capable of reforming kerosene and a solid oxide fuel cell which uses as a fuel a reformed gas obtained by the reformer, **characterized in that**:
the indirect internal reforming-type solid oxide fuel cell comprises a plurality of solid oxide fuel cell stacks;
the reformer comprises a plurality of reaction tubes packed with a reforming catalyst capable of steam-reforming kerosene; and
the reaction tubes are arranged in two rows with the tubes spaced from each other and form a staggered arrangement in a location interposed between the stacks.

2. The indirect internal reforming-type solid oxide fuel cell according to claim 1, wherein the two tube rows of the reaction tubes are arranged with an overlap in the direction perpendicular to the tube row direction.

3. The indirect internal reforming-type solid oxide fuel cell according to claim 1 or 2, wherein the two tube rows of the reaction tubes are arranged with an overlap in the tube row direction.

4. The indirect internal reforming-type solid oxide fuel cell according to claim 1 or 2, wherein the reforming catalyst comprises a reforming catalyst having a kerosene oxidative activity.

5. The indirect internal reforming-type solid oxide fuel cell according to claim 3, wherein the reforming catalyst comprises a reforming catalyst having a kerosene oxidative activity.

6. A reformer capable of reforming kerosene, used for an indirect internal reforming-type solid oxide fuel cell, **characterized in that**:
the reformer has a plurality of reaction tubes packed with a reforming catalyst; and
the reaction tubes are arranged in two rows with the tubes spaced from each other and form a staggered arrangement.

7. The reformer according to claim 6, wherein the reforming catalyst comprises a reforming catalyst having a kerosene oxidative activity.
